# EUROPEAN PATENT APPLICATION

(11) **EP 3 667 486 A1**
(43) Date of publication of application: **17.06.2020**
(21) Application number: 19215441.7
(22) Date of filing: 11.12.2019
(51) Int. Cl.: G06F 3/16, G06F 3/0482, G06F 3/0488, G08G 5/00

(54) **SYSTEMS AND METHODS FOR MANAGING COMMUNICATIONS ON A VEHICLE**

(30) Priority: 14.12.2018 US 201862779982 P; 13.11.2019 US 201916682847
(71) Applicant: Honeywell International Inc., Morris Plains, NJ 07950 (US)
(72) Inventor: WYATT, Ivan S., Morris Plains, NJ New Jersey 07950 (US); MOROWSKY, Katarina, Morris Plains, NJ New Jersey 07950 (US); GANNON, Aaron, Morris Plains, NJ New Jersey 07950 (US); HEINE, Christopher, Morris Plains, NJ New Jersey 07950 (US)
(74) Representative: Houghton, Mark Phillip

(57) **Abstract**

Disclosed are methods, systems, and non-transitory computer-readable medium for managing communications on a vehicle. For instance, the method may include obtaining a configured state of audio systems and communications systems; generating a graphical user interface (GUI) based on the configured state; displaying the GUI, the GUI including a plurality of icons, the plurality of icons corresponding to the communications systems, the plurality of icons indicating which communications systems are being monitored for output and/or receiving an audio input through the audio systems; receiving a user input on the GUI; and performing a communication control process or a communication setting process based on the user input. The method may further include: in response to determining the user input is the first user input type, performing the communication control process; and in response to determining the user input is the second user input type, performing the communication setting process.

## Description

### TECHNICAL FIELD

Various embodiments of the present disclosure relate generally to systems and methods for managing communications on a vehicle and, more particularly, to systems and methods for managing communications on a vehicle by a graphic user interface (GUI).

### BACKGROUND

Traditionally, vehicles, such as aircraft, have separate systems for audio control and radio control. For instance, audio control functions may be provided in a discrete hardware panel or software display window that have physical or software buttons and sliders used to manipulate the various controls. The audio controls may (1) control a microphone ("Mic") that selects a particular radio system to be used to talk on; (2) control over monitoring ("Mon") that selects specific receiver(s) of radio systems to listen on; and (3) control over volume for the selected specific receivers. Separate from the audio control, a radio control device (or separate window interface) may manipulate various aspects of the radio system(s). The radio system controls may (1) control frequency or channels of the radio system(s); (2) control to squelch radio system(s) to suppress noise from the radio system(s); (3) control to select 8.33/25 kHz frequency separation modes; and (4) control to select Data/Voice mode, to select the function of the radio system(s) for digital information communication or human speech communications.

One issue with separate systems for audio control and radio control may be that users (e.g., pilots) may wish to make changes to the audio control and radio control systems while operating on one of the separate systems for audio control and radio control, but the user will have to transition between the separate systems. Therefore, the user may be inefficient in making the changes to the audio control or radio control systems.

Furthermore, another issue for systems that use touch screens (e.g., "Touch Screen Control" (TSC) devices) as one/both of the separate systems, is the limited display space. The audio control functions or radio control functions may be nested in menu layering. For instance, the user may need to make five or more inputs to traverse menu(s) or link(s) to finally arrive at the audio control function or the radio control functions display. Therefore, the user may be inefficient in traversing the menu(s) or link(s) and be inefficient in making the changes to the audio control or radio control systems.

The present disclosure is directed to overcoming one or more of these above-referenced challenges.

### SUMMARY OF THE DISCLOSURE

According to certain aspects of the disclosure, systems and methods are disclosed for managing communications on a vehicle.

For instance, a method may include: obtaining a configured state of audio systems and communications systems; generating a graphical user interface (GUI) based on the configured state; displaying the GUI, the GUI including a plurality of icons, the plurality of icons corresponding to the communications systems, the plurality of icons indicating which communications systems are being monitored for output and/or receiving an audio input through the audio systems; receiving a user input on the GUI; and performing a communication control process or a communication setting process based on the user input.

A system may include memory storing instructions; and a processor executing the instructions to perform a process. The process may include obtaining a configured state of audio systems and communications systems; generating a graphical user interface (GUI) based on the configured state; displaying the GUI, the GUI including a plurality of icons, the plurality of icons corresponding to the communications systems, the plurality of icons indicating which communications systems are being monitored for output and/or receiving an audio input through the audio systems; receiving a user input on the GUI; and performing a communication control process or a communication setting process based on the user input.

A non-transitory computer-readable medium may store instructions that, when executed by a processor, cause the processor to perform a method. The method may include: obtaining a configured state of audio systems and communications systems; generating a graphical user interface (GUI) based on the configured state; displaying the GUI, the GUI including a plurality of icons, the plurality of icons corresponding to the communications systems, the plurality of icons indicating which communications systems are being monitored for output and/or receiving an audio input through the audio systems; receiving a user input on the GUI; and performing a communication control process or a communication setting process based on the user input.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system environment, according to one or more embodiments.
FIG. 2A-2C depict a sequence of a GUI on a touch screen for managing communications on a vehicle, according to one or more embodiments.
FIG. 3 depicts a GUI on a touch screen for managing communications on a vehicle, according to one or more embodiments.
FIG. 4 depicts a flow chart of an exemplary method for managing communications on a vehicle, according to one or more embodiments.
FIG. 5 depicts an example system that may execute techniques presented herein.

### DETAILED DESCRIPTION OF EMBODIMENTS

Various embodiments of the present disclosure relate generally to systems and methods for managing communications on a vehicle.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

As used herein, the terms "comprises," "comprising," "having," including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, relative terms, such as, for example, "about," "substantially," "generally," and "approximately" are used to indicate a possible variation of ±10% in a stated value. The term "exemplary" is used in the sense of "example" rather than "ideal." As used herein, the singular forms "a," "an," and "the" include plural reference unless the context dictates otherwise.

While this disclosure describes the systems and methods with reference to aircraft, it should be appreciated that the present systems and methods are applicable to managing communications of vehicles, including those of drones, automobiles, ships, or any other autonomous and/or Internet-connected vehicle.

In general, the present disclosure is directed to systems and methods for managing communications on a vehicle using a GUI. Specifically, as discussed in detail below, this disclosure describes systems and methods of integrating audio control and radio control functions into a combined GUI. The GUI may allow a user to combine operations to control both (1) communication by selecting to whom to talk and listen to, and (2) the radio system settings. As the audio control and radio control may be combined in a single GUI, the user may not have to transition between separate systems; therefore, the user may be efficient in transitioning between controls for the audio control and radio control.

Moreover, as the audio control and the radio control may be combined in a combined GUI, the GUI may provide a single interface paradigm, thereby easing the user workload, speeding the process to make changes, and reducing errors. Furthermore, the GUI may enable the user to traverse straight to, e.g., radio controls from audio controls by a second user input type. Therefore, the user may not have to traverse multiple menu(s) or link(s) to arrive at the radio controls.

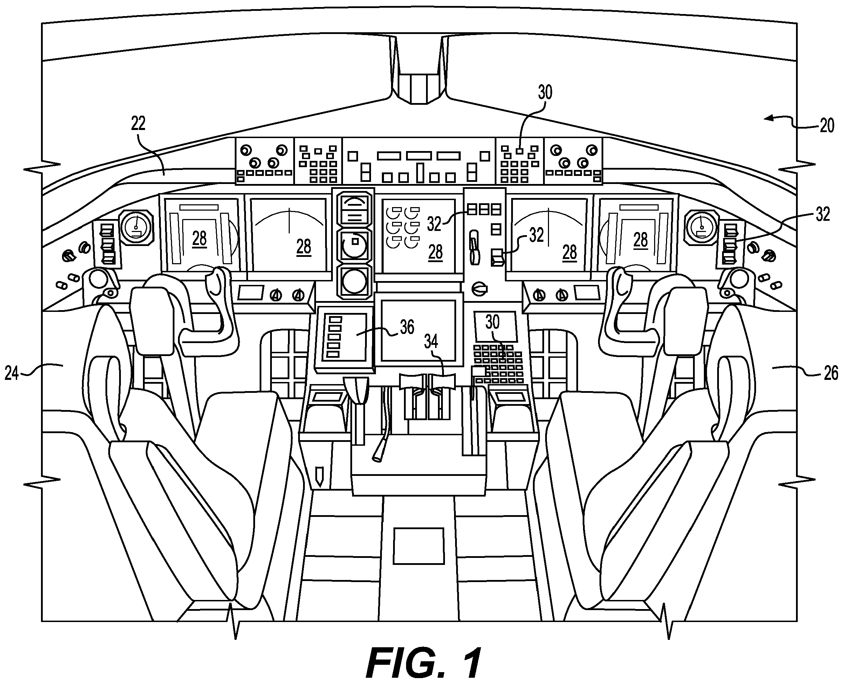

As shown in FIG. 1, an exemplary system environment is depicted, according to one or more embodiments. Specifically, FIG. 1 depicts a fragmentary perspective view illustrating the inside of an exemplary aircraft cockpit 20. Although the context of the following discussion is with respect to GUIs of touch screen displays used in aircraft, it should be understood that the teachings herein pertain to touch screen displays used in any type of vehicle including, but not limited to, land based vehicles such as automobiles and trains as well as watercraft and spacecraft. Additionally, the teachings herein are not limited to vehicle applications. Rather, the teachings herein may also be used together with touch screen displays that are employed in stationary applications such as information kiosks and automatic teller machines as well as with touch screen displays that are hand held or otherwise not mounted to a surface.

Aircraft cockpit 20 includes an instrument panel 22 positioned to be accessible from a pilot seat 24 and a copilot seat 26. Instrument panel 22 includes various front displays 28 and various control features such as buttons 30, switches 32, and throttle controls 34. Also mounted on instrument panel 22 is a control touch screen display 36. Moreover, the front displays 28 may also be a touch screen displays.

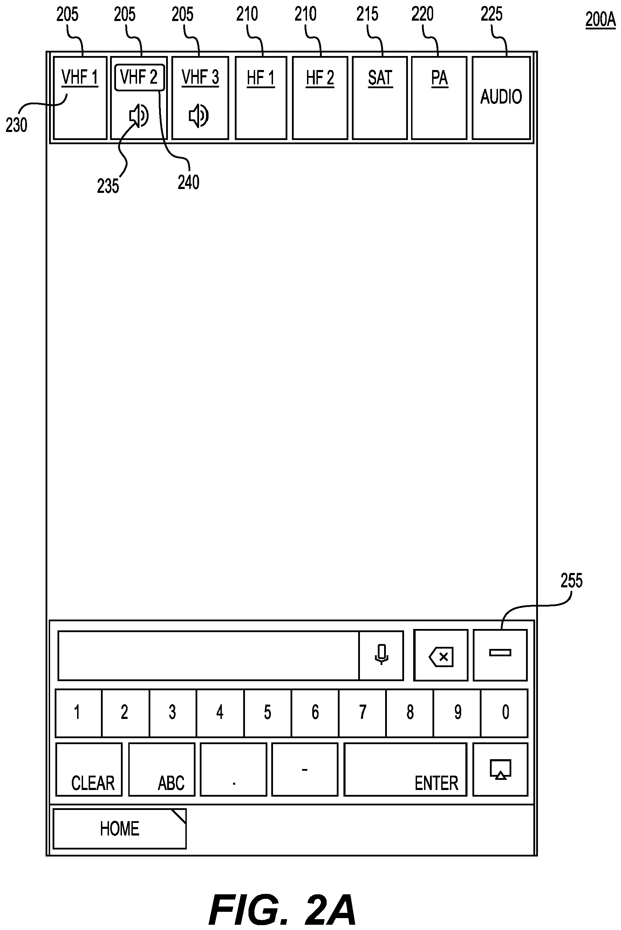

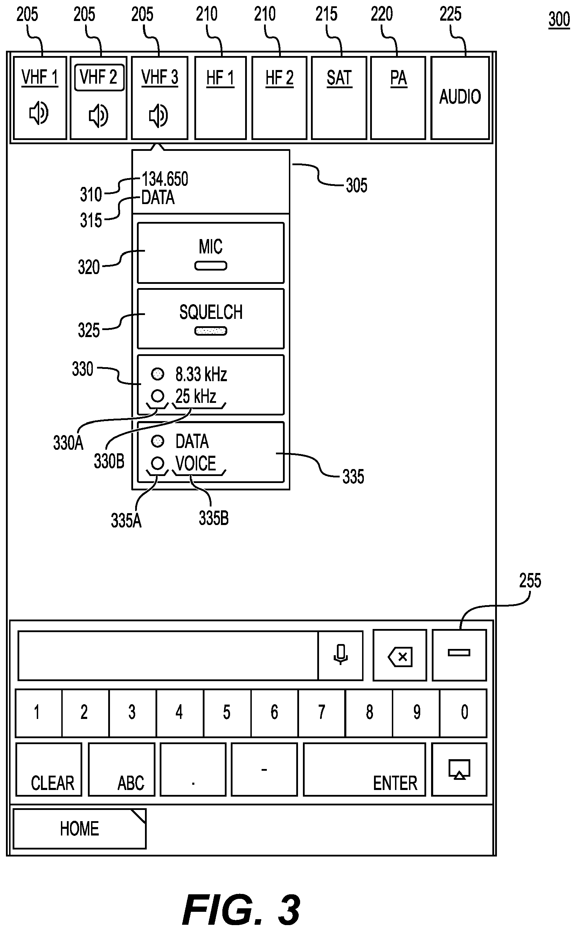

One of the front displays 28 or the control touch screen display 36 may be configured to operate as a communication manager (hereinafter referred to as "touch screen"). Specifically, a processor may execute a communication control program (comprised of instructions executable by the processor) that causes the touch screen to display a communication control display. For instance, the communication control display may include one or more GUIs as disclosed herein (or variations thereof), such as GUI 200A, GUI 200B, GUI 200C, and GUI 300 (as depicted in FIGS. 2A-2C and 3, respectively). The GUI 200A, GUI 200B, and GUI 200C may depict a sequence of displayed images on the touch screen in response to a first user input. The GUI 300 may depict a displayed image on the touch screen in response to a second user input.

The processor may cause the touch screen to display the communication control display by generating images and transmitting the images to the touch screen to be displayed. Alternatively, the processor may generate instructions and information and transmit the instructions and information to a graphics processing unit (GPU). The GPU may generate the images to be displayed on the touch screen. The communication control program may be stored in a memory. The memory may be connected to the processor so that the processor may receive stored instructions or data, and the processor may process the instructions, stored data, and received information in accordance with the communication control program. The memory and the processor may be connected to the touch screen either directly or indirectly. Collectively the memory, the processor, and the touch screen may be referred to as a "system."

For instance, the communication control program may control which radios are on/off; which frequencies/channels, mode (e.g., voice or data), squelch on/off are selected for the radio systems; which audio systems are on/off, which audio systems are receiving audio from the user, which audio systems are providing audio to the user; and/or volume of audio systems (collectively "configured state"). The communication control program may store the configured state in the memory. The communication control program may control communication systems (radio systems, audio systems, etc.) based on user inputs to the system. Specifically, the communication control program may display the communication control display to indicate the current configured state, and receive user inputs to change to the configured state of the controls and/or to display additional information about the configured state.

Generally, the communication control display may include a header that has one or more communication icons and a user input section 255. The one or more communications icons may correspond to very high frequency (VHF) communications systems, high frequency (HF) communications systems, satellite (SAT) communications systems, public address (PA) communications systems, or audio communications menu. For instance, as depicted in GUI 200A, 200B, 200C, and 300, the header may include one or more VHF icon(s) 205, one or more HF icon(s) 210, one or more SAT icon(s) 215, a PA icon 220, and/or an audio icon 225 (collectively "icons"). Each of the icons may be associated with a region of the touch screen. The region may be of a generally rectangular shape; however, any polygonal shape may be defined to correspond to the icon for touch input purposes. The icons/regions for icons may be adjacent to each other along the top of the GUI; meanwhile the user input section 255 may be displayed (with regions for user inputs to be sensed for corresponding buttons, etc.) along the bottom the GUI. The icons may include borders displayed on the GUI, and the borders may correspond to the regions for the icons.

The icons may be displayed as text (e.g., "VHF1," "HF1," ""SAT," "PA," etc.) or graphics. The icons may be selected by user inputs on corresponding regions of the touch screen or by other selection inputs (e.g., scroll wheel). Specifically, the one or more VHF icon(s) 205, the one or more HF icon(s) 210, the one or more SAT icon(s) 215, and/or the PA icon 220 may be selected by the first user input or the second user input.

User inputs may be the first user input, the second user input, or any other type of user input described herein. Generally, the user input may be a touch interaction with the touch screen (e.g., capacitive, resistive, and/or optical sensing), a user input on a keyboard, a mouse, a scroll wheel, or any other system-defined manner of selecting and interacting with the system. The processor may receive the user inputs and perform specific actions based on the user inputs, as discussed herein.

In one aspect of the disclosure, the first user input may be a short touch on a region associated with an icon; meanwhile the second user input may a long touch on the region associated with an icon. The short touch may be any touch on the region for more than a minimum amount up to a configurable threshold period of time (e.g., less than one second). The long touch may be any touch for more than a configurable period of time (e.g., more than two seconds) up to a maximum period of time. The period of time for the short touch and the long touch may be the same or the period of time for the short touch may be less than the period of time for the long touch. Other user inputs may be one of or a combination of: a tap (e.g., a touch on a region of an icon for less than a minimum period of time), a swipe (e.g., a touch on a region of an icon that moves/drags/remains in contact with the touch screen interface from a starting position in the region to an ending position in the region or out of the region by a threshold distance), or multi-finger inputs (e.g., two or more discernable touch points in a region). For instance, the audio icon 225 may be selected by the first user input described above or by one of other user inputs.

In another aspect of the disclosure, the first user input may be the long touch, and the second user input may be the short touch. In another aspect of the disclosure, the first user input may be a tap, and the second user input may be the short touch or the long touch. In another aspect of the disclosure, the first user input may be a first swipe, and the second user input may be a second swipe (that is in a different direction than the first swipe or is in the same direction as the first swipe but for a longer length). Generally, in another aspect of the disclosure, the first user input may be one of: the short touch, the long touch, the tap, a swipe in a direction, or a multi-finger input (referred to as a "first input type"), and the second user input may be another (but not the same as the first user input) of: the short touch, the long touch, the tap, a swipe in a direction, or a multi-finger input (referred to as a "second input type").

The one or more VHF icon(s) 205, the one or more HF icon(s) 210, the one or more SAT icon(s) 215, and/or the PA icon 220 may be associated with one or a combination of: an underline bar 230, a monitor icon 235, a highlight icon 240, or a volume control icon 245.

The underline bar 230 may indicate that the associated icon (e.g., VHF icon 205, HF icon 210, SAT icon 215, or PA icon 220) has a context menu accessible by the second user input. The context menu and the second user input are discussed below with respect to FIG. 3.

The monitor icon 235 may indicate that a corresponding communications system associated with the icon (e.g., VHF icon 205, HF icon 210, SAT icon 215, or PA icon 220) is actively selected to output audio to a user of the system. The output audio may be received over the corresponding communications system by the system, and output by a speaker or headset (not depicted) connected directly or indirectly to the system. None, one, or more icon(s) may be actively selected to output audio, and therefore none, one, or more icon(s) may be associated with the monitor icon 235. The monitor icon 235 (when it is displayed associated with an icon) may be displayed below the icon within the region associated with the icon. Alternatively, the monitor icon 235 (when it is displayed associated with an icon) may be displayed adjacent to the icon within/without the region associated with the icon, either above the icon, to the left or to the right of the icon, etc.

The highlight icon 240 may indicate that a corresponding communications system associated with the icon (e.g., VHF icon 205, HF icon 210, SAT icon 215, or PA icon 220) is actively selected to receive audio input to a microphone (not depicted). The microphone may be connected to the system either directly or indirectly. The microphone may receive audio, convert the audio into analog or digital signals, and transmit the analog or digital signals to the system. The system may receive the analog or digital signals and transmit appropriate signals to the corresponding communications system. For instance, only one icon (and corresponding communications system) may be actively selected to receive the audio input to the microphone, and therefore only one icon may be associated with the highlight icon 240. Alternatively, two or more icons (and corresponding communications systems) may be actively selected to receive the audio input to the microphone, and therefore the two or more icons may be associated with a highlight icon 240. The highlight icon 240 may inverse the background with the text of an icon within a border around the text of the icon. Furthermore, the corresponding communications system (and icon with the highlight icon 240) may automatically monitor the corresponding communications system (if it was not already monitored) so that the monitor icon 235 will also be displayed with the icon associated with the corresponding communications system (and the audio output of the corresponding communications system will be output to the user). An icon (and corresponding communications system) may be actively selected by accessing the context menu associated with the icon, as discussed below with respect to FIG. 3.

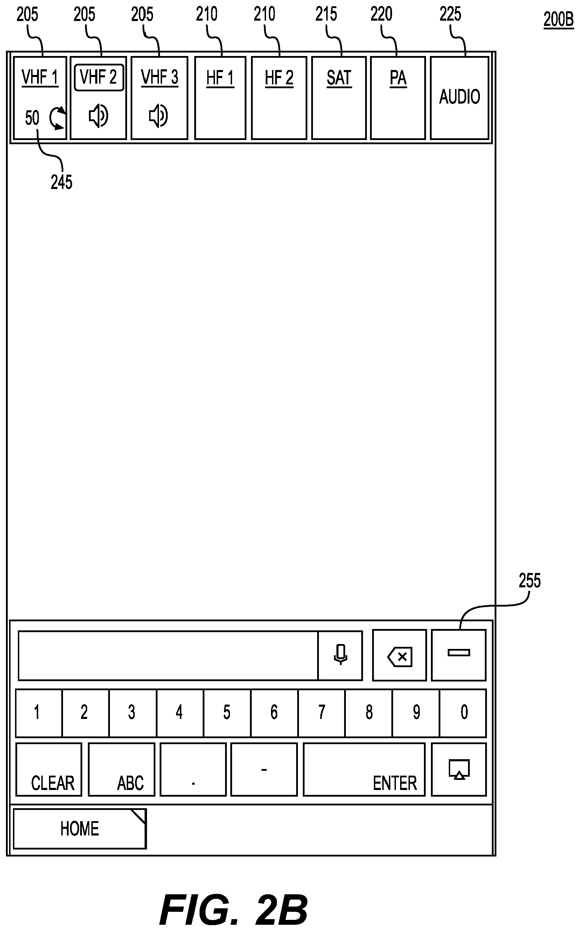

The volume control icon 245 may indicate a current volume setting and/or an ability to change the current volume setting for a corresponding communications system associated with the icon (e.g., VHF icon 205, HF icon 210, SAT icon 215, or PA icon 220). The volume control icon 245 may display a text and/or a graphic. The text may display the current volume setting as a number indicating a percentage of total available volume or of relative scale of volume, for instance in FIG. 2B the current volume may be 50% for VHF1. The current volume setting for the corresponding communications system may (1) be the previously set volume (stored in the memory of the system) or (2) a default volume (stored in the memory of the system) each time a corresponding communications system is selected to be monitored. The volume control icon 245 may be displayed for a configurable period of time (e.g., five seconds). During the time the volume control icon 245 is displayed, the system may allow the user to adjust the current volume setting (e.g., by hardware or software knob, slider, etc.); otherwise, the system may ignore any user inputs to change the volume. The volume control icon 245 (when it is displayed associated with an icon) may be displayed below the icon within the region associated with the icon. Alternatively, the volume control icon 245 (when it is displayed associated with an icon) may be displayed adjacent to the icon within/without the region associated with the icon, either above the icon, to the left or to the right of the icon, etc.

The audio icon 225 may be selected as discussed above. The touch screen may receive the user input, and transmit the user input and region associated with the user input (e.g. the region associated with the audio icon 225) to the processor. The processor may, based on/in response to, the user input and the region corresponding to the region associated with the audio icon 225, open an audio panel page. The audio panel page may disclose all audio functions in a single place and/or display audio functions in a menu or link architecture.

The user input section 255 may be a touch screen input function area. For instance, the user input section 255 may have different configurations to enter alphanumeric text-strings (e.g., letters and/or numerals), along with a display section for the entered string, a back space button to delete individual letters and/or numerals, a clear button to clear an entered text numbers or text input, and a speaker command button. The speaker command button may be selected by the user to activate one or more of (1) speech-to-text function to enter text into the display section and/or (2) speech-to-action function to change systems settings on the system.

FIG. 2A-2C depict a sequence of a GUI on a touch screen for managing communications on a vehicle, according to one or more embodiments. Generally, the one or more VHF icon(s) 205, the one or more HF icon(s) 210, the one or more SAT icon(s) 215, and/or the PA icon 220 may be interacted with as discussed below with respect VHF1. Specifically, FIGS. 2A-2C depict a sequence of a GUI for a communication control process. The communication control process may include: receiving a user input; determining whether the user input is in a region associated with an icon; and in response to determining the user input is in a region associated with an icon, determining a communication control action based on the user input. For instance, the communication control process may receive a user input; determine whether the user input is in a region associated with an icon; if so, determine whether the user input is a first user input type (or third or fourth, depending on the configured state) (as defined above); and monitor a corresponding communications system (if the communications system was not being monitored), stop monitoring a corresponding communications system (if the communications system was being monitored), or allow user inputs to adjust a volume of a corresponding communications system.

FIG. 2A may display a configured state of the communication manager, for instance with a VFH2 associated with the highlight icon 240 (indicating VFH2 is receiving the microphone outputs of input audio) and VHF2 and VHF3 are associated with monitor icons 235 (indicating the audio output to the user is from VHF2 and VHF3).

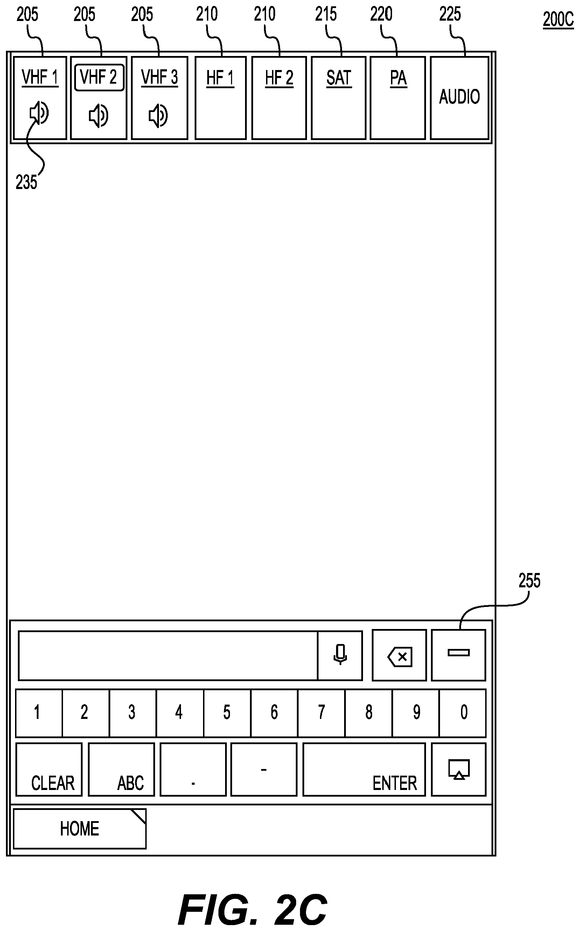

A user may perform the first user input in a region associated with VHF1. The touch screen may receive the first user input, and transmit an input message to the processor indicating the first user input and the VHF1 region. The processor may, in response to the first user input and the VHF1 region, cause the volume control icon 245 to appear in association to the VHF1 icon (see, e.g., FIG. 2B). Then, the processor may remove the volume control icon 245 and cause the monitor icon 235 to be displayed in association to the VHF1 icon (see, e.g., FIG 2C). While the volume control icon 245 is displayed (for a period of time or until a user input), the user may adjust a volume of corresponding communications system to the VHF1 icon. The processor may immediately start monitoring the corresponding communications system and outputting audio to the user from the corresponding communication system, or the processor may wait until the period of time or until the user input to start outputting the audio to the user.

Furthermore, the processor may perform a process to stop monitoring a corresponding communications system. For instance, the user may perform a third user input in a region associated with VHF1 as depicted in FIG 2C. The touch screen may receive the third user input, and transmit the input message to the processor. The processor may, in response to the third user input and the region, remove the monitor icon 235 from the display, and stop monitoring the corresponding communication infrastructure (e.g., as depicted in FIG. 2A).

Alternatively, the processor may perform a process to access a volume control mode of the system. For instance, the user may perform a fourth user input in a region associated with VHF1 as depicted in FIG. 2C. The touch screen may receive the fourth user input, and transmit the input message to the processor. The processor may, in response to the fourth user input and the region, remove the monitor icon 235 and display the volume control icon 245 (see, e.g., FIG. 2B). While the volume control icon 245 is displayed, the user may adjust the volume of the VHF1. After the period of time or until another user input, the processor may remove the volume control icon 245, and display the monitor icon 235 (see, e.g., FIG. 2C).

The third user input and the fourth user input may each be one of the short touch, the long touch, the tap, a swipe in a direction, or a multi-finger input (referred to as "third user input type" and "fourth user input type," respectively). The system may be configured so that one of the third user input or fourth user input may be the same as the first user input, while the other is different from the first user input (and both different from the second user input). Alternatively, the system may be configured so that both third user input and the fourth user input are different from the first user input and the second user input. The third user input and the fourth user input may be different from each other.

FIG. 3 depicts a GUI on a touch screen for managing communications on a vehicle, according to one or more embodiments. Generally, the one or more VHF icon(s) 205, the one or more HF icon(s) 210, the one or more SAT icon(s) 215, and/or the PA icon 220 may be interacted with as discussed below with respect VHF3. Specifically, FIG. 3 may depict a GUI as a part of communication setting process. The communication setting process may include: receiving a user input; determining whether the user input is in a region associated with an icon; and in response to determining the user input is in a region associated with an icon, displaying a context menu ("menu") for a corresponding communication system. After displaying the menu, the communication setting process may receive another user input to change a setting of the corresponding communication system. For instance, the communication setting process may receive a user input; determine whether the user input is in a region associated with an icon; if so, determine whether the user input is a second user input type (as defined above); and, in response to determining the user input is the second user input type, display a menu for a corresponding communications system. After displaying the menu, the communication setting process may receive user inputs to change settings of the corresponding communications system.

FIG. 3 may display a state of the communication manager, for instance as in FIG. 2C, but after/in response to the second user input. Therefore, GUI 300 may be the same as the GUI 200A, GUI 200B, and GUI 200C, however GUI may also include a menu 305. Menu 305 may by the context menu discussed above for each of the icons that are associated with an underline bar 230. Each of the one or more VHF icon(s) 205, the one or more HF icon(s) 210, the one or more SAT icon(s) 215, and/or the PA icon 220, may have a different type of context menu, depending on an underlying communications system; for instance the PA icon 220 may not have the same context menu as a SAT icon 215 context menu.

For instance, as depicted in FIG. 3, the menu 305 may depict the context menu for VHF3 (but may have similar buttons and information displayed as for context menus for VHF1 or VH2, or HF 1 or HF 2). Specifically, menu 305 may display the configured state of VHF3 and provide the user with an interface to make changes to the configured state of VHF3. For instance, menu 305 may include a channel information icon 310, a data/voice indicator 315, a mic button 320, a squelch button 325, a frequency selection button 330, and/or a data/voice selection button 335. To close the menu 305, the user may input a user input anywhere else on the screen. The menu 305 may be displayed below the header and/or in a same horizontal (from a left or right edge of the GUI) section /general area of the GUI as the icon associated with the menu 305. Furthermore, the menu 305 may have an indicator carrot that extends from the menu 305 to the icon associated with the menu 305. Alternatively, the menu 305 may be displayed anywhere within the displayable screen.

The channel information icon 310 may, for a corresponding communications system associated with the icon, display a currently set channel as a text-string, for instance for VHF3 the channel may be "134.650." The user may select a region associated with the text-string to change the channel associated with the icon. For instance, the channel may be changed by selecting common (to the type of vehicle, user, owner, etc.), suggested (based on location of vehicle and/or communication partners, e.g., Air Traffic Control), or nearby channels (the next channel or surrounding channels to the current channel) from a menu (not depicted); by inputs to the user input section 255; or by inputs to the voice-to-text function. One of skill in the art would recognize that this may be applied to VHF1, VHF2, HF1, and HF2, and an analogous selection process for satellite communications as well.

The data/voice selection button 335 may, for a corresponding communications system associated with the icon, display a current selection as between digital information communication (a first mode) or human speech communication (a second mode), and the user may select a change to the other by a user input (e.g., a tap) to toggle between the modes. As depicted in FIG. 3, the data/voice selection button 335 may display text for "data" and text for "voice" 335B with associated indicator symbols 335A. The currently selected mode (e.g., either the first mode or the second mode) may be displayed as a text color and color of the indicator symbol 335 being different from the non-selected mode. The data/voice indicator 315 may display a corresponding indication of which of the modes is selected as a text string, such "Data" or "Voice."

The frequency selection button 330 may, for a corresponding communications system associated with the icon, display a current selection as between two or more frequency range modes that are allowed for the vehicle, type of flight, or operation. The user may select a change to another of the frequency range modes by a user input (e.g., a tap) to toggle between the frequency range modes. As depicted in FIG. 3, frequency selection button 330 may display text for "8.33 kHz" and text for "25kHz" 330B with associated indicator symbols 330A, as aircraft generally use 8.33 or 25 kHz frequency separation between channels. The currently selected mode may be displayed as a text color and color of the indicator symbol 330A being different from the non-selected mode(s).

The mic button 320 may, for a corresponding communications system associated with the icon, have an indicator of whether the corresponding communications system associated with the icon (e.g., VHF icon 205, HF icon 210, SAT icon 215, or PA icon 220) is actively selected to receive audio input to the microphone by an indicator. The user may select to toggle the selection on/off by a user input (e.g., a tap). As depicted in FIG. 3, VHF3 is not currently selected, so the indicator is off.

The squelch button 325 may, for a corresponding communications system associated with the icon, have an indicator of whether the corresponding communications system associated with the icon (e.g., VHF icon 205, HF icon 210, SAT icon 215, or PA icon 220) is actively selected to be squelched. The user may select to toggle the selection on/off by a user input (e.g., a tap). As depicted in FIG. 3, VHF3 is currently selected to be squelched, so the indicator is on; therefore, the VHF3 audio output to the user would be dampened.

The menu 305 may be exited/closed. For instance the menu 305 may be exited or closed by a user input making a change to the configured settings of the menu 305, after a set period of time with no user input (e.g. 1 minute), or by a user input outside a region associated with the menu 305.

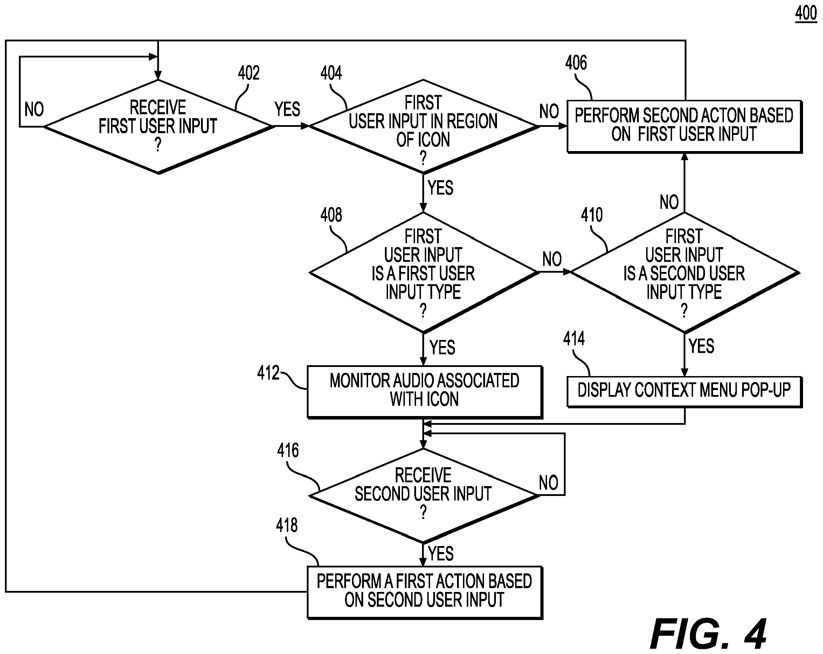

FIG. 4 depicts a flow chart for managing communications on a vehicle, according to one or more embodiments. The flowchart 400 may depict a method. The method may include, by a system with a processor, memory, and touch screen: determine whether the touch screen has received a first user input (block 402). If no first user input is received, the method may continue to wait until the first user input is received (block 402: No).

If a first user input is received (block 402: Yes), the method may proceed to determine whether the first user input is in a region of an icon (block 404). For instance, the system may determine whether the first user input was in a region associated with an icon. If not (block 404: No), the method may proceed to perform a second action based on the first user input (block 406). For instance, the second action may be a user input on the user input section 255. Then, the method may proceed to wait for a first user input again (block 402).

If the first user input is in the region of the icon (block 404: Yes), the method may proceed to determine whether the first user input is a first user input type (block 408). For instance, the system may determine whether the first user input was a short touch, a long touch, a tap, a swipe in a direction, or a multi-finger input that is defined as the first user input discussed above with respect to FIGS. 2A-2C.

If not (block 408: No), the method may proceed to determine whether the first user input was a second user input type (block 410). For instance, the system may determine whether the first user input was a short touch, a long touch, a tap, a swipe in a direction, or a multi-finger input that is defined as the second user input discussed above with respect to FIGS. 2A-2C. If not (block 410: No), the method may proceed to perform a second action based on the first user input (block 406). Then, the method may proceed to wait for a first user input again.

If the first user input was a first user input type (block 408: Yes), the method may proceed to monitor an audio associated with the icon (block 412). For instance, the system may monitor the audio and/or allow a user to change a volume setting, as discussed above with respect to FIGS. 2A-2C.

If the first user input was a second user input type (block 410: Yes), the method may display a menu (block 414). The menu may correspond to the icon. For instance, the system may display a menu 305, as discussed above with respect to FIG. 3.

The method may proceed to determine whether a second user input is received (block 416). If not (block 416: No), the method may proceed to wait until the second user input is received.

If the second user input is received (block 416: Yes), the method may proceed to perform a first action based on the second user input (block 418). Then, the method may proceed to wait for a first user input again.

The first action may be one of: when the first user input is a first user input type, adjust a volume of an audio, or when the first user input is a second user input type: (1) turn on a mic mode for an audio, change a channel, change a squelch mode, change a channel mode, or change a data/voice mode of a radio/audio.

The second action may some other interaction with a GUI (e.g., inputs to the user input section 255).

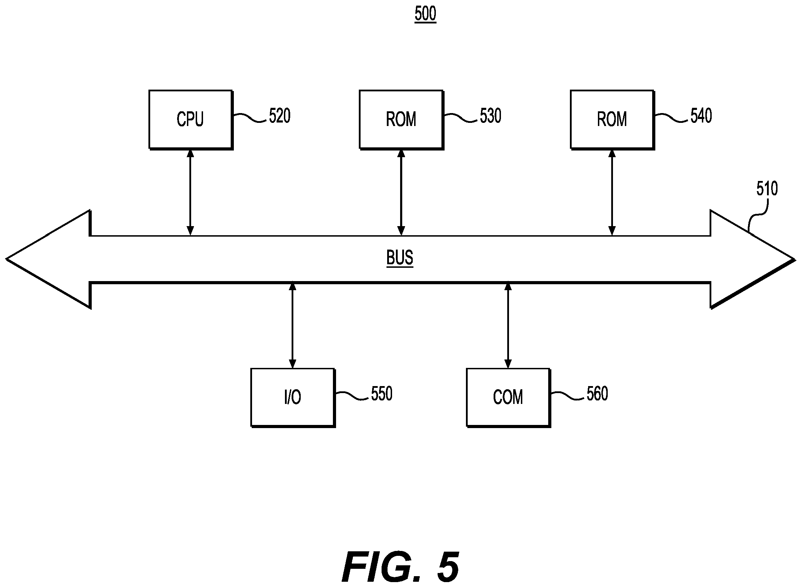

FIG. 5 depicts an example system that may execute techniques presented herein. FIG. 5 is a simplified functional block diagram of a computer that may be configured to execute techniques described herein, according to exemplary embodiments of the present disclosure. Specifically, the computer (or "platform" as it may not be a single physical computer infrastructure) may include a data communication interface 560 for packet data communication. The platform may also include a central processing unit ("CPU") 520, in the form of one or more processors, for executing program instructions. The platform may include an internal communication bus 510, and the platform may also include a program storage and/or a data storage for various data files to be processed and/or communicated by the platform such as ROM 530 and RAM 540, although the system 500 may receive programming and data via network communications. The system 500 also may include input and output ports 550 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, minicomputers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A method for managing communications on a vehicle, comprising:
obtaining a configured state of audio systems and communications systems;
generating a graphical user interface (GUI) based on the configured state;
displaying the GUI, the GUI including a plurality of icons, the plurality of icons corresponding to the communications systems, the plurality of icons indicating which communications systems are being monitored for output and/or receiving an audio input through the audio systems;
receiving a user input on the GUI; and
performing a communication control process or a communication setting process based on the user input being in a region associated with an icon of the plurality of icons and being a first user input type or a second user input type.

2. The method of claim 1, wherein the GUI further includes, for one or a combination of icons, of the plurality of icons:
an underline bar indicating a context menu for an icon is accessible,
a monitor icon indicating a corresponding communications system associated with an icon is actively selected to output audio through the audio systems,
a highlight icon indicating a corresponding communications system associated with an icon is actively selected to receive audio input to a microphone of the audio systems, and/or
a volume control icon indicating a current volume setting and/or an ability to change the current volume setting for a corresponding communications system associated with an icon.

3. The method of claim 2, wherein before the performing the communication control process or the communication setting process, the method further comprises:
determining whether an input region of the user input is in the region associated with the icon of the plurality of icons; and
in response to determining the input region of the user input is in the region associated with the icon, performing the communication control process or the communication setting process based on the user input and the icon.

4. The method of claim 3, wherein the performing the communication control process or the communication setting process based on the user input and the icon includes:
determining whether the user input is the first user input type or the second user input type;
in response to determining the user input is the first user input type, performing the communication control process; and
in response to determining the user input is the second user input type, performing the communication setting process.

5. The method of claim 4, wherein the communication control process includes:
determining a communication control action based on the user input,
wherein the communication control action corresponds to:
monitoring a communications system corresponding to the icon if the configured state indicates the communications system was not currently being monitored,
stopping the monitoring the communications system if the configured state indicates the communications system was currently being monitored, or
allowing user inputs to adjust a volume of the communications system.

6. The method of claim 4, wherein the communication setting process includes:
displaying a context menu for a communications system corresponding to the icon on the GUI;
receiving another user input; and
changing a setting of the communications system based on the another user input.

7. The method of claim 6, wherein the context menu includes information for a configured state of the communications system and an interface to make changes to the configured state of the communications system to change the setting of the communications system.

8. A system for managing communications on a vehicle, the system comprising:
a memory storing instructions; and
a processor executing the instructions to perform a process including:
obtaining a configured state of audio systems and communications systems;
generating a graphical user interface (GUI) based on the configured state;
displaying the GUI, the GUI including a plurality of icons, the plurality of icons corresponding to the communications systems, the plurality of icons indicating which communications systems are being monitored for output and/or receiving an audio input through the audio systems;
receiving a user input on the GUI; and
performing a communication control process or a communication setting process based on the user input being in a region associated with an icon of the plurality of icons and being a first user input type or a second user input type.

9. The system of claim 8, wherein the GUI further includes, for one or a combination of icons, of the plurality of icons:
an underline bar indicating a context menu for an icon is accessible,
a monitor icon indicating a corresponding communications system associated with an icon is actively selected to output audio through the audio systems,
a highlight icon indicating a corresponding communications system associated with an icon is actively selected to receive audio input to a microphone of the audio systems, and/or
a volume control icon indicating a current volume setting and/or an ability to change the current volume setting for a corresponding communications system associated with an icon.

10. The system of claim 9, wherein before the performing the communication control process or the communication setting process, the process further includes:
determining whether an input region of the user input is in the region associated with the icon of the plurality of icons; and
in response to determining the input region of the user input is in the region associated with the icon, performing the communication control process or the communication setting process based on the user input and the icon.
